# EUROPEAN PATENT SPECIFICATION

(11) **EP 4 415 296 B1**
(45) Date of publication and mention of the grant of the patent: **20.05.2026**
(21) Application number: 24155605.9
(22) Date of filing: 02.02.2024
(51) Int. Cl.: H04L 5/00

(54) **APPARATUS AND METHOD FOR SOUNDING IN MULTIPLE ACCESS POINT NETWORK**
VORRICHTUNG UND VERFAHREN ZUR SONDIERUNG IN EINEM NETZWERK MIT MEHREREN ZUGANGSPUNKTEN
APPAREIL ET PROCÉDÉ DE SONDAGE DANS UN RÉSEAU À POINTS D'ACCÈS MULTIPLES

(30) Priority: 07.02.2023 KR 20230016268; 25.05.2023 KR 20230067725
(43) Date of publication of application: 14.08.2024
(73) Proprietor: Samsung Electronics Co., Ltd., Suwon-si, Gyeonggi-do 16677 (KR)
(72) Inventor: KIM, Myeongjin, 16677 Suwon-si (KR); KIM, Jinmin, 16677 Suwon-si (KR); CHUNG, Chulho, 16677 Suwon-si (KR); JEON, Eunsung, 16677 Suwon-si (KR)
(74) Representative: Marks & Clerk LLP

(56) References cited:
- US-A1- 2021 359 724
- US-A1- 2021 409 179

## Description

### BACKGROUND

Aspects of the inventive concept relate to wireless communication, and more particularly, to sounding for channel estimation in a multiple access point (MAP) network of a wireless local area network (WLAN) system.

As an example of wireless communication, a WLAN is a technology for interconnecting two or more devices using a wireless signal transmission scheme. The WLAN may be based on the Institute of Electrical and Electronics Engineers (IEEE) 802.11 standard. The 802.11 standard has been developed according to standards like 802.11b, 802.11a, 802.11g, 802.11n, 802.11ac, and 802.11ax and may support transmission speeds up to 1 Gbyte/s based on the orthogonal frequency-division multiplexing (OFDM) technique.

On the other hand, as the number of access points (AP) included in a WLAN system increases rapidly to provide WLAN to more stations (STA), interference between APs having different basic service sets (BSSs) increases, thereby causing deterioration of overall performance of a WLAN system. A technology related to a multiple AP network (hereinafter, referred to as a MAP network) is being proposed to reduce interference between APs.

US 2021/409179 A1 relates to a signaling design solution applicable to a scenario of multi-AP coordinated transmission. A communication method is described, including: a first access point (AP) generating notification information, where the notification information indicates a station (STA) that is to send a channel sounding physical layer protocol data unit (PDDU), the notification information includes identification information of the STA and identification information of a second AP, the identification information of the STA indicates the STA, and the identification information of the second AP indicates the second AP. The first AP sends the notification information to the second AP and to the STA.

### SUMMARY

Aspects of the inventive concept provide an apparatus and method for efficiently performing sounding for channel estimation in a multiple access point (MAP) network of a wireless local area network (WLAN) system.

According to an aspect of the inventive concept, there is provided a method according to claim 1.

Each null data packet may comprise a preamble portion, but not include a payload.

The MAP sounding may comprise performing sounding for channel estimation (i.e. performing channel sounding).

The transmitting the first NDP to the station in association with transmission of the second NDP comprises transmitting the first NDP and the second NDP based on the NDP transmission scheme in response to the identification of the NDP transmission scheme. The null data packet transmission period is a transmission period, the length of which is dependent upon the identified NDP transmission scheme.

In some embodiments, identifying the null data packet transmission scheme comprises: checking a second value indicating the NDP transmission scheme from a NDP type subfield of a common information field of the MAP network frame, in response to a first value of a MAP mode field of the MAP network frame indicating a MAP sounding mode. The common information field may comprise information that is common to the second access point and the first access point.

In some embodiments, the identifying of the access point information field assigned to the second access point comprises comparing a first value of a basic service sets ID subfield of the access point information field with a second value that is a basic service sets ID assigned to the second access point. The access point information field assigned to the second access point may be identified in response to determining that the first value and the second value match.

In some embodiments, the method further comprises: following transmission of the first NDP, transmitting a first multiple access point trigger frame to the station; and following, the transmission of the first multiple access point trigger frame, receiving a multiple access point sounding feedback associated with the first multiple access point trigger frame from the station.

In some embodiments, the method comprises the first access point transmitting the second NDP. In some embodiments, the method comprises: following the transmission of the first NDP, receiving sounding feedback from the station.

According to another aspect of the inventive concept, there is provided a method according to claim 9

The multiple access point network frame may identify each of the second apparatuses.

The method may comprises: determining based on the multiple access point network frame, a common format of null data packets of the second apparatuses; and determining, based on the multiple access point network frame, individual settings for null data packet generation of each of the second apparatuses.

In some embodiments, the multiple access point network may comprises fourth apparatuses, which are access points, the fourth apparatuses including the first access points and the second apparatuses.

In some embodiments, the method may further comprises transmitting a null data packet to one of the third apparatuses in association with transmission of a further null data packet from one of the second apparatuses to the one of the third apparatuses within an null data packet transmission period based on the determined null data packet (NDP) transmission scheme.

At least some of the above and other features of the invention are set out in the claims.

### BRIEF DESCRIPTION OF THE DRAWINGS

Embodiments of the inventive concept will be more clearly understood from the following detailed description taken in conjunction with the accompanying drawings in which:
FIG. 1 is a diagram showing a wireless communication system according to an embodiment;
FIG. 2 is a block diagram showing a wireless communication system according to an embodiment;
FIGS. 3 and 4 are timing diagrams showing multiple access point (MAP) sounding according to embodiments;
FIGS. 5A and 5B are diagrams for describing a MAP interference enhancing operation performed based on channel state information collected through MAP sounding, according to an embodiment;
FIGS. 6A and 6B are flowcharts of a method for a sharing AP to determine a null data packet (NDP) transmission scheme, according to an embodiment;
FIG. 7 is a diagram showing a MAP network frame according to an embodiment;
FIGS. 8A and 8B are flowcharts of a method for a sharing AP to determine a target AP participating in MAP sounding, according to an embodiment;
FIGS. 9A and 9B are flowcharts of a method for a sharing AP to determine a target station (STA) participating in MAP sounding, according to an embodiment;
FIG. 10 is a diagram showing a common information field included in the MAP network frame of FIG. 7;
FIG. 11 is a diagram showing an AP information field included in the MAP network frame of FIG. 7;
FIG. 12 is a diagram showing an STA information field included in the MAP network frame of FIG. 7;
FIG. 13 is a diagram showing an arrangement relationship between AP information fields and STA information fields in a MAP network frame, according to an embodiment;
FIG. 14 is a flowchart showing a method of identifying STA information regarding a station, according to an embodiment;
FIG. 15 is a flowchart of an operation method in a MAP network, according to an embodiment;
FIG. 16 is a diagram showing examples of apparatuses for wireless communication according to an embodiment; and
FIG. 17 is a block diagram showing an apparatus according to an embodiment.

### DETAILED DESCRIPTION OF THE EMBODIMENTS

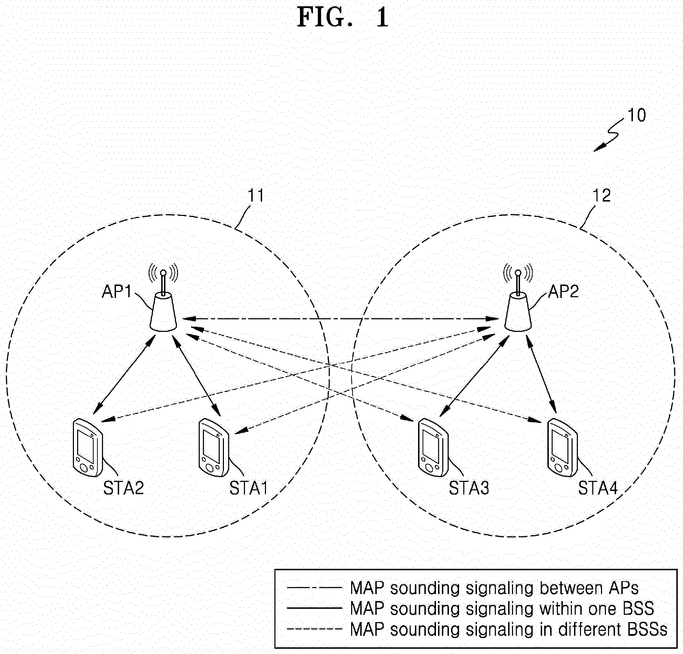

FIG. 1 is a diagram showing a wireless communication system 10 according to an embodiment. For example, FIG. 1 shows a wireless local area network (WLAN) system as an example of the wireless communication system 10.

Although detailed descriptions of embodiments of the inventive concept are based on a wireless communication system based on orthogonal frequency division multiplexing (OFDM) or orthogonal frequency division multiplexing access (OFDMA) (in particular, the IEEE 802.11 standard), aspects of the inventive concept may also be applied to any communication system having a similar technical background and a similar channel structure (e.g., a cellular communication system like long term evolution (LTE), LTE-advanced (LTE-A), new radio (NR), wireless broadband (WiBro), and global system for mobile communication or a short-range communication system like Bluetooth (Bluetooth) or near field communication (NFC)) with slight modifications within the scope of the inventive concept, based on a judgment of one of ordinary skill in the art.

Also, various functions described below may be implemented or supported by artificial intelligence technology or one or more computer programs, each of which is composed of computer readable program codes and implemented on a computer readable medium. The terms "application" and "program" refer to one or more computer programs, software components, instruction sets, procedures, functions, objects, classes, instances, related data, or portions thereof suitable for the implementation of suitable computer readable program codes. The term "computer readable program codes" includes all types of computer codes including source codes, object codes, and executable codes. The term "computer readable medium" includes all types of media that may be accessed by computers, such as a read only memory (ROM), a random access memory (RAM), a hard disk drive, a compact disk (CD), a digital video disk (DVD), or other types of memories. A "non-transitory" computer readable medium excludes wired, wireless, optical, or other types of communication links that transmit transitory electrical or other signals. The non-transitory computer readable medium includes a medium in which data may be permanently stored and a medium in which data may be stored and later overwritten, such as a rewritable optical disk or an erasable memory device.

In various embodiments described below, a hardware approach is described as an example. However, since various embodiments include technology using both hardware and software, the various embodiments do not exclude a software-based approach.

Also, terms that refer to control information, terms that refer to entries, terms that refer to network entities, terms that refer to messages, and terms that refer to components of devices used in the descriptions given below are merely examples for convenience of explanation. Therefore, aspects of the inventive concept are not limited to the terms described below, and other terms having equivalent technical meanings may be used.

Referring to FIG. 1, the wireless communication system 10 may include a first access point AP1, a second access point AP2, a first station STA1, a second station STA2, a third station STA3, and a fourth station STA4. The first access point AP1 and the second access point AP2 may access a network including the Internet, an Internet protocol (IP) network, or any other network. The first access point AP1 may provide access to the network to the first station STA1 and the second station STA2 within a first basic service set (BSS) 11, and the second access point AP2 may provide access to the network to the third station STA3 and the fourth station STA4 within a second BSS 12. In this specification, a BSS may be understood as a coverage region in which an access point may control access to a network. According to some embodiments, the first access point AP1 and the second access point AP2 may communicate with at least one of the first station STA1, the second station STA2, the first access point AP1 and the third station STA3, and the fourth station STA4 based on the wireless fidelity (WiFi) or any other WLAN access technology.

An access point may be referred to as a router and a gateway. A station may be referred to as a mobile station, a subscriber station, a terminal, a mobile terminal, a wireless terminal, a user equipment, and/or a user apparatus. A station may be a portable device like a mobile phone, a laptop computer, or a wearable device or may be a stationary device like a desktop computer or a smart TV. In this specification, for convenience of explanation, an access point may be interchangeably referred to as an AP, and a station may be interchangeably referred to as an STA.

The first access point AP1 and the second access point AP2 may allocate at least one resource unit (RU) to at least one of first to fourth stations STA1 to STA4. The first access point AP1 and the second access point AP2 may transmit data through at least one allocated RU, and the at least one station may receive data through the at least one allocated RU. In the 802.11ax, the first access point AP1 and the second access point AP2 may allocate only a single RU to at least one station. Meanwhile, in the case of the 802.11be (e.g., extremely high throughput (EHT)) or next-generation IEEE 802.11 standards (e.g., , EHT+ or ultra-high reliability (UHR)), the first access point AP1 and the second access point AP2 may allocate a multi-resource unit (MRU) including two or more RUs to at least one station (i.e. to each station). For example, the first access point AP1 may allocate an MRU to at least one of first station STA1 and the second station STA2 and transmit data through the allocated MRU.

The first access point AP1 and the second access point AP2 and the first to fourth stations STA1 to STA4 may communicate with each other by using a beamforming technique. For example, the first access point AP1 may perform single-user beamforming with the first station STA1 to improve reception performance in communication with the first station STA1 or improve reception performance in overall communication with the first station STA1 and the second station STA2 by removing interference between the first station STA1 and the second station STA2 by performing multi-user beamforming with the first station STA1 and the second station STA2.

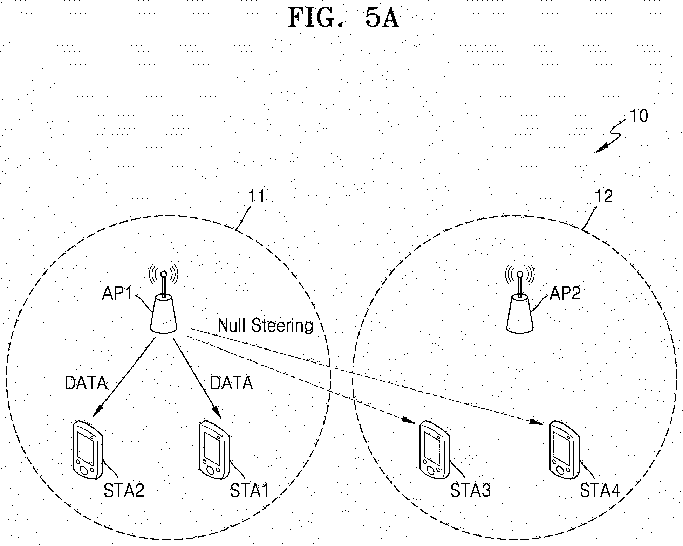

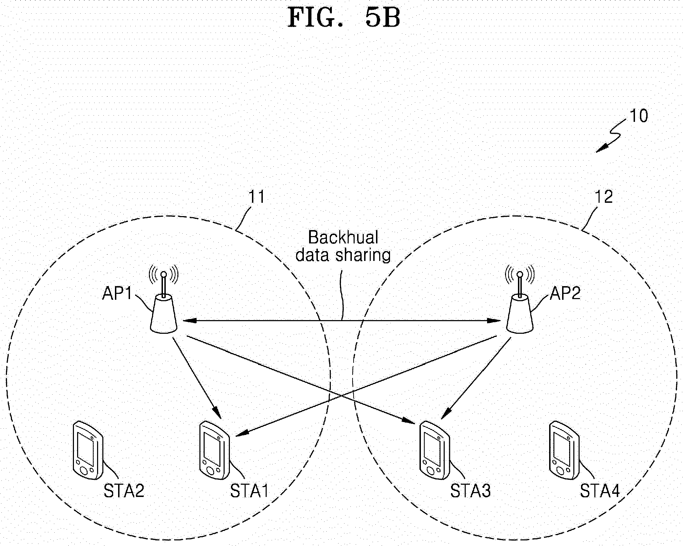

In an environment of a multiple AP network (hereinafter referred to as a MAP network) including the first access point AP1 and the second access point AP2, communication between the first access point AP1 and the first station STA1 and the second station STA2 with the first BSS 11 and communication between the second access point AP2 and the third station STA3 and the fourth station STA4 with the second BSS 12 may interfere with each other. To reduce the above-stated interference, the first access point AP1 and the second access point AP2 may select and perform any one of a coordinated beamforming operation and a joint transmission operation. Details of the coordinated beamforming operation and the joint transmission operation are described below with reference to FIGS. 5A and 5B.

Meanwhile, the first access point AP1 and the second access point AP2 may need channel state information regarding stations in different BSSs to perform a coordinated beamforming operation or a joint transmission operation. For example, the first access point AP1 may need not only channel state information with respect to the first station STA1 and the second station STA2 in the first BSS 11, but may also need channel state information with respect to the third station STA3 and the fourth station STA4 in the second BSS 12. Also, the second access point AP2 may need not only channel state information with respect to the third station STA3 and the fourth station STA4 in the second BSS 12, but may also need channel state information with respect to the first station STA1 and the second station STA2 in the first BSS 11.

Aspects of the inventive concept propose embodiments in which the first access point AP1 and the second access point AP2 may obtain channel state information regarding the first to fourth stations STA1 to STA4 in the first BSS 11 and the second BSS 12 to perform a MAP interference enhancing operation for reducing mutual interference between the first access point AP1 and the second access point AP2. In this specification, the MAP interference enhancing operation is an operation capable of reducing mutual interference between access points in a MAP network environment and may be defined as an operation that additionally needs channel state information regarding stations in other BSSs.

In the MAP network including the first access point AP1 and the second access point AP2 according to an embodiment, MAP sounding for efficiently and effectively obtaining channel state information from the first to fourth stations STA1 to STA4 in the first BSS 11 and the second BSS 12 may be performed. In this specification, MAP sounding may include a plurality of operations for access points participating in the MAP sounding to collect channel state information from stations participating in the MAP sounding.

According to an embodiment, the first access point AP1 and the second access point AP2 may perform MAP sounding signaling. The MAP sounding signaling between the first access point AP1 and the second access point AP2 may include signaling for determining a subject for controlling MAP sounding and transmission/reception of a MAP network frame in the MAP sounding. In FIG. 1, it is described on the premise that the first access point AP1 and the second access point AP2 and the first to fourth stations STA1 to STA4 participate in the MAP sounding. However, it is merely an embodiment and aspects of the inventive concept are not limited thereto. The number of access points and stations participating in MAP sounding may be adaptively changed.

According to an embodiment, the first access point AP1 and the second access point AP2 may perform MAP sounding signaling within the first BSS 11 and the second BSS 12 controlled by the first access point AP1 and the second access point AP2, respectively. For example, MAP sounding signaling in the first BSS 11 may include transmission/reception operations regarding a null data packet (NDP) and transmission/reception operations regarding a MAP sounding feedback including channel state information between the first access point AP1 and the first station STA1 and the second station STA2. Also, MAP sounding signaling in the second BSS 12 may include transmission/reception operations regarding an NDP packet and transmission/reception operations regarding a MAP sounding feedback including channel state information between the second access point AP2 and the third station STA3 and the fourth station STA4.

According to an embodiment, the first access point AP1 and the second access point AP2 may each perform MAP sounding signaling with a different first BSS 11 or a different second BSS 12. For example, MAP sounding signaling in the different second BSS 12 may include transmission/reception operations regarding a NDP and transmission/reception operations regarding a MAP sounding feedback including channel state information between the first access point AP1 and the third station STA3 and the fourth station STA4. Also, MAP sounding signaling in the different first BSS 11 may include transmission/reception operations regarding a NDP and transmission/reception operations regarding a MAP sounding feedback including channel state information between the second access point AP2 and the first station STA1 and the second station STA2.

Hereinafter, a series of operations for each MAP subject will be described on the premise that the first access point AP1 is a subject for controlling MAP sounding. In this specification, an access point that is the subject of controlling MAP sounding may be referred to as a sharing access point (or sharing AP), and the rest of access points of the MAP sounding may be referred to as shared access points (or shared APs).

According to an embodiment, in MAP sounding signaling between the first access point AP1 and the second access point AP2, the first access point AP1 and the second access point AP2 may exchange MAP network-related information including information regarding corresponding BSSs (i.e., the first BSS 11 and the second BSS 12) and determine the first access point AP1 as the subject of controlling MAP sounding. According to some embodiments, information regarding the first BSS 11 and the second BSS 12 may include information regarding stations belonging to the corresponding BSSs.

First, embodiments are described based on the first access point AP1, which is a sharing access point.

According to an embodiment, the first access point AP1 may determine shared access points participating in MAP sounding and stations participating in MAP sounding. Although only the first access point AP1 and the second access point AP2 are shown in FIG. 1, it is merely an embodiment, and a MAP network may include more access points. In this case, the first access point AP1 may determine shared access points participating in MAP sounding from among a plurality of access points. For example, the first access point AP1 may determine that the second access point AP2 and the first to fourth stations STA1 to STA4 are participating in MAP sounding.

According to an embodiment, the first access point AP1 may determine an NDP transmission scheme for MAP sounding. The NDP transmission scheme may be commonly applied when access points participating in MAP sounding transmit NDPs to stations participating in the MAP sounding. According to an embodiment, the NDP transmission scheme may include a first scheme in which access points sequentially transmit NDPs to stations in a certain order within an NDP transmission period (hereinafter also referred to as a 'serial NDP transmission' scheme) and a second scheme in which access points simultaneously transmit NDPs to stations within an NDP transmission period (hereinafter also referred to as a 'joint NDP transmission' scheme). Also, according to some embodiments, any one of a scheme in which NDPs transmitted from access points are coordinated by the access points to be orthogonal to each other (hereinafter also referred to as a 'joint NDP-11be-like LTFs' scheme) and a scheme in which access points adjust subcarriers for transmission of NDPs to be interleaved with respect to each other (hereinafter also referred to as a 'joint NDP sounding-subcarrier interleaved LTFs' scheme) may be applied as the second scheme.

According to an embodiment, the first access point AP1 may generate a MAP network frame indicating at least one access point and a plurality of stations determined to participate in MAP sounding and indicating a determined NDP transmission scheme. For example, the first access point AP1 may generate a MAP network frame indicating the second access point AP2 and the first to fourth stations STA1 to STA4 participating in MAP sounding and indicating a determined NDP transmission scheme. Also, the MAP network frame may further indicate the first access point AP1 that controls MAP sounding and participates therein. In this specification, it may be understood that a frame, a field, or a subfield indicating particular information includes the particular information.

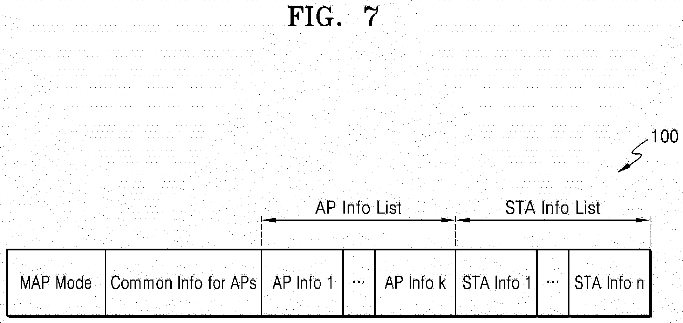

According to an embodiment, to start MAP sounding, the first access point AP1 may transmit a MAP network frame to the second access point AP2 and the first to fourth stations STA1 to STA4 participating in the MAP sounding. The MAP network frame may include information that the second access point AP2 and the first to fourth stations STA1 to STA4 need to know for MAP sounding. The second access point AP2 and the first to fourth stations STA1 to STA4 may each participate in MAP sounding based on the MAP network frame. A detailed embodiment of the format of the MAP network frame is described later with reference to FIG. 7.

Second, embodiments are described based on the second access point AP2, which is a shared access point.

According to an embodiment, the second access point AP2 may identify a NDP transmission scheme from the MAP network frame received from the first access point AP1. Also, the second access point AP2 may generate an NDP based on NDP-related information included in the MAP network frame. For example, NDP-related information may include NDP common format information and NDP individual setting information. The second access point AP2 may determine the format of an NDP based on the NDP common format information and generate an NDP identified as being transmitted from the second access point AP2 based on the NDP individual setting information.

According to an embodiment, the second access point AP2 may transmit an NDP to the first to fourth stations STA1 to STA4 in association with NDP transmission of the first access point AP1 within an NDP transmission period based on an identified NDP transmission scheme.

Third, embodiments are described based on the first station STA1. Embodiments described below may also be applied to second to fourth stations STA2 to STA4.

According to an embodiment, the first station STA1 may obtain information regarding MAP sounding from a received MAP network frame. Information regarding MAP sounding may include at least one of information needed for the first station STA1 to receive NDPs transmitted from the first access point AP1 and the second access point AP2, information needed for channel state estimation using NDPs, information needed for generation of MAP sounding feedbacks including channel state information, and information needed for transmission of the MAP sounding feedbacks to the first access point AP1 and the second access point AP2.

According to an embodiment, the first station STA1 may sequentially or simultaneously receive NDPs from the first access point AP1 and the second access point AP2 based on information regarding MAP sounding. For example, the first station STA1 may identify an NDP transmission scheme based on information regarding MAP sounding, determine timings for receiving NDPs based on an identified NDP transmission scheme, and accurately receive NDPs.

According to an embodiment, the first station STA1 may generate a first MAP sounding feedback to be transmitted to the first access point AP1 and a second MAP sounding feedback to be transmitted to the second access point AP2, based on information regarding MAP sounding. For example, the first station STA1 may estimate a channel state between the first station STA1 and the first access point AP1 by using an NDP received from the first access point AP1, generate channel state information, and generate the first MAP sounding feedback including the channel state information. Also, the first station STA1 may estimate a channel state between the first station STA1 and the second access point AP2 by using an NDP received from the second access point AP2 and generate the second MAP sounding feedback indicating an estimated channel state.

According to an embodiment, the first station STA1 may transmit the first MAP sounding feedback to the first access point AP1 in response to a first MAP trigger frame received from the first access point AP1 and transmit the second MAP sounding feedback to the second access point AP2 in response to a second MAP trigger frame received from the second access point AP2. In the first station STA1, the transmission timing of the first MAP sounding feedback may be different from the transmission timing of the second MAP sounding feedback.

In this regard, the first access point AP1 and the second access point AP2 may receive MAP sounding feedbacks from the first to fourth stations STA1 to STA4 and perform a MAP interference enhancing operation based on received MAP sounding feedbacks.

In the wireless communication system 10 according to an embodiment, the first access point AP1 and the second access point AP2 constituting a MAP network may perform MAP sounding, thereby obtaining feedbacks indicating channel states from the first to fourth stations STA1 to STA4 by efficiently using RF resources. Also, the first access point AP1 and the second access point AP2 may effectively perform a MAP interference enhancing operation by using obtained feedbacks, and thus the overall communication performance may be improved.

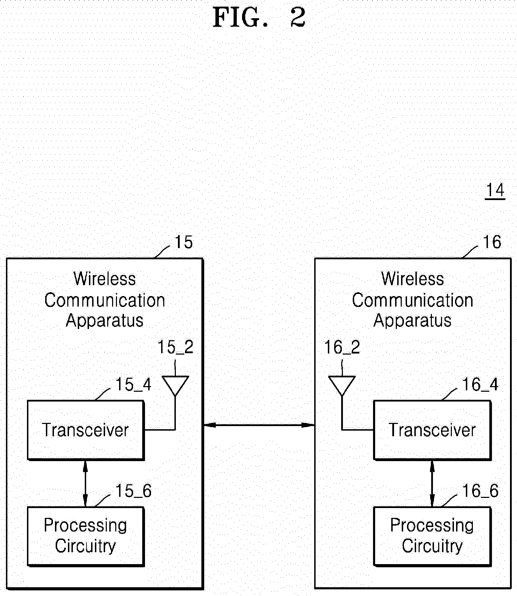

FIG. 2 is a block diagram showing a wireless communication system 14 according to an embodiment. For example, FIG. 2 shows a first wireless communication apparatus 15 and a second wireless communication apparatus 16 that communicate with each other in the wireless communication system 14. Each of the first wireless communication apparatus 15 and the second wireless communication apparatus 16 of FIG. 2 may be any device that performs communication in the wireless communication system 14 and may be referred to as an apparatus for wireless communication. According to some embodiments, each of the first wireless communication apparatus 15 and the second wireless communication apparatus 16 may be an access point or a station of a WLAN system.

Referring to FIG. 2, the first wireless communication apparatus 15 may include an antenna 15_2, a transceiver 15_4, and a processing circuitry 15_6. According to some embodiments, the antenna 15_2, the transceiver 15_4, and the processing circuitry 15_6 may be included in one package or may be included in different packages, respectively. The second wireless communication apparatus 16 may also include an antenna 16_2, a transceiver 16_4, and a processing circuitry 16_6. Hereinafter, redundant descriptions of the first wireless communication apparatus 15 and the second wireless communication apparatus 16 will be omitted.

The antenna 15_2 may receive a signal from the second wireless communication apparatus 16 and provide the signal to the transceiver 15_4 and may also transmit a signal provided from the transceiver 15_4 to the second wireless communication apparatus 16. According to some embodiments, the antenna 15_2 may include a plurality of antennas for multiple input multiple output (MIMO). Also, according to some embodiments, the antenna 15_2 may include a phased array for beam forming.

The transceiver 15_4 may process a signal received from the second wireless communication apparatus 16 through the antenna 15_2 and may provide a processed signal to the processing circuitry 15_6. Also, the transceiver 15_4 may process a signal provided from the processing circuitry 15_6 and may output a processed signal through the antenna 15_2. In some embodiments, the transceiver 15_4 may include an analog circuitry like a low noise amplifier, a mixer, a filter, a power amplifier, and an oscillator. In some embodiments, the transceiver 15_4 may process a signal received from the antenna 15_2 and/or a signal received from the processing circuitry 15_6 based on the control of the processing circuitry 15_6.

The processing circuitry 15_6 may extract information transmitted by the second wireless communication apparatus 16 by processing a signal received from the transceiver 15_4. For example, the processing circuitry 15_6 may extract information by demodulating and/or decoding a signal received from the transceiver 15_4. Also, the processing circuitry 15_6 may generate a signal including information to be transmitted to the second wireless communication apparatus 16 and provide the signal to the transceiver 15_4. For example, the processing circuitry 15_6 may provide a signal generated by encoding and/or modulating data to be transmitted to the second wireless communication apparatus 16 to the transceiver 15_4. According to some embodiments, the processing circuitry 15_6 may include a programmable component like a central processing unit (CPU) and a digital signal processor (DSP), a reconfigurable component like a field programmable gate array (FPGA), or a component that provides a fixed function like an intellectual property (IP) core. According to some embodiments, the processing circuitry 15_6 may include or access a memory that stores data and/or a series of instructions.

Herein, the transceiver 15_4 and/or the processing circuitry 15_6 performing operations may be simply stated as the first wireless communication apparatus 15 performing the corresponding operations. Therefore, operations performed by an access point may be performed by a transceiver and/or a processing circuitry included in the access point, and operations performed by a station may be performed by a transceiver and/or a processing circuitry included in the station.

According to an embodiment, when the first wireless communication apparatus 15 operates as a sharing access point, the first wireless communication apparatus 15 may generate a MAP network frame for starting MAP sounding and transmit the MAP network frame to the second wireless communication apparatus 16 operating as a shared access point or a station.

According to an embodiment, when the second wireless communication apparatus 16 operates as a shared access point, the second wireless communication apparatus 16 may participate in MAP sounding by transmitting NDPs to stations in a plurality of BSSs based on a MAP network frame received from the first wireless communication apparatus 15.

According to an embodiment, when the second wireless communication apparatus 16 operates as a station, the second wireless communication apparatus 16 may participate in MAP sounding by transmitting a MAP sounding feedback to the first wireless communication apparatus 15 based on a MAP network frame and an NDP received from the first wireless communication apparatus 15.

According to an embodiment, some components of the first wireless communication apparatus 15 and the second wireless communication apparatus 16 may be implemented in software, such that operations for MAP sounding according to embodiments may be performed in a medium access control (MAC) layer. According to an embodiment, some components of the first wireless communication apparatus 15 and the second wireless communication apparatus 16 may be implemented in hardware, such that operations for MAP sounding according to embodiments may be performed in a physical (PHY) layer.

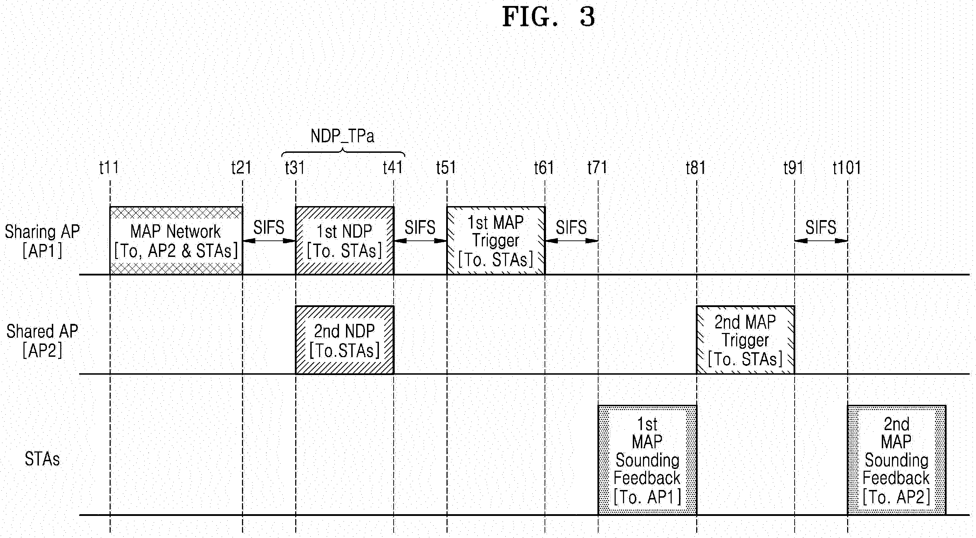

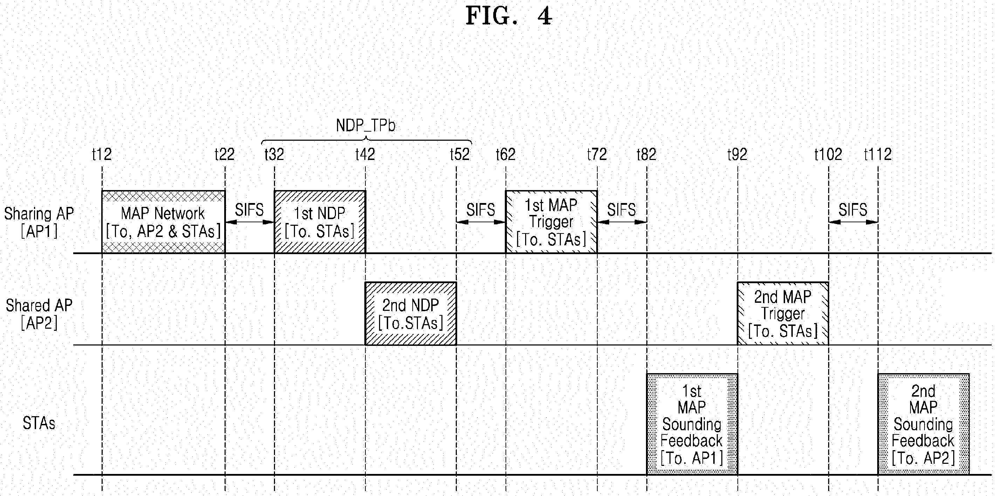

FIGS. 3 and 4 are timing diagrams showing multiple access point (MAP) sounding according to embodiments. In FIGS. 3 and 4, it is on the premise that the first access point AP1 is a sharing AP, the second access point AP2 is a shared AP, and the first access point AP1, the second access point AP2, and stations STAs participate in MAP sounding. However, since FIGS. 3 and 4 are merely embodiments, aspects of the inventive concept are not limited thereto, and aspects of the inventive concept may be applied to a MAP network including a greater number of shared AP.

Referring to FIG. 3, at a time point t11, the first access point AP1 may transmit a MAP network frame to the second access point AP2 and the stations STAs. The second access point AP2 and the stations STAs may receive the MAP network frame, obtain information needed for MAP sounding from the MAP network frame and prepare for MAP sounding based on the obtained information.

At a time point t31, which is a time point a short interframe space (SIFS) after a time point t21, the first access point AP1 may transmit a first NDP to the stations STAs.

At the time point t31, the second access point AP2 may transmit a second NDP to the stations STAs in parallel with the first access point AP1 based on an NDP transmission scheme identified from the MAP network frame. For example, in a NDP transmission period NDP_TPa between the time point t31 and a time point t41, the first access point AP1 and the second access point AP2 may simultaneously transmit a first NDP and a second NDP to the stations STAs, respectively. For example, the first NDP and the second NDP may be coordinated by the first access point AP1 and the second access point AP2 to be transmitted orthogonally with respect to each other to avoid mutual interference. In another example, the first NDP and the second NDP may be coordinated by the first access point AP1 and the second access point AP2, such that first subcarriers for transmission of the first NDP and second subcarriers for transmission of the second NDP are interleaved with respect to each other to avoid mutual interference.

The stations STAs may identify the first NDP and the second NDP based on information obtained from the MAP network frame. The stations STAs may each generate first channel state information by estimating a first channel state between itself and the first access point AP1 by using the first NDP. Also, the stations STAs may each generate second channel state information by estimating a second channel state between itself and the second access point AP2 by using the second NDP.

At a time point t51, which is a time point a SIFS after the time point t41, the first access point AP1 may transmit a first MAP trigger frame to the stations STAs. For example, the first MAP trigger frame may correspond to a beamforming report poll (BFRP) trigger frame.

At a time point t71, which is a time point a SIFS after a time point t61, the stations STAs may each transmit a first MAP sounding feedback including the first channel state information to the first access point AP1 in response to the first MAP trigger frame. In this specification, a MAP sounding feedback may also be referred to as a MAP feedback frame.

At a time point t81, the second access point AP2 may transmit a second MAP trigger frame to the stations STAs. For example, the second MAP trigger frame may correspond to a BFRP trigger frame.

At a time point t101, which is a time point a SIFS after a time point t91, the stations STAs may each transmit a second MAP sounding feedback including the second channel state information to the second access point AP2 in response to the second MAP trigger frame.

The first access point AP1 and the second access point AP2 may perform a MAP interference enhancing operation based on the first MAP sounding feedback and the second MAP sounding feedback received from the stations STAs.

Referring further to FIG. 4, at a time point t12, the first access point AP1 may transmit a MAP network frame to the second access point AP2 and the stations STAs. As described above, the second access point AP2 and the stations STAs may receive the MAP network frame, obtain information needed for MAP sounding from the MAP network frame and prepare for MAP sounding based on obtained information.

At a time point t32, which is a time point a SIFS after a time point t22, the first access point AP1 may transmit a first NDP to the stations STAs.

At the time point t42, the second access point AP2 may transmit a second NDP to the stations STAs after the first access point AP1 transmits the first NDP, based on a NDP transmission scheme identified from the MAP network frame. For example, in a NDP transmission period NDP_TPb between the time point t32 and a time point t42, the first access point AP1 and the second access point AP2 may sequentially transmit a first NDP and a second NDP to the stations STAs. Although FIG. 4 shows that the transmission of the first NDP does not overlap the transmission of the second NDP in terms of time, aspects of the inventive concept are not limited thereto, and the end (i.e., a portion) of the transmission of the first NDP may overlap the beginning of the transmission of the second NDP in terms of time. According to some embodiments, information regarding an NDP transmission sequence may be included in the MAP network frame.

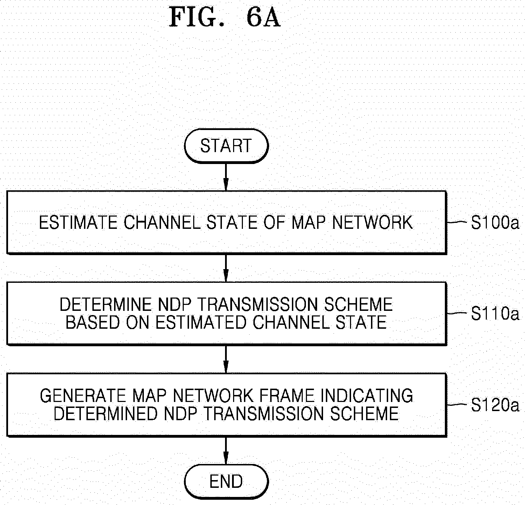

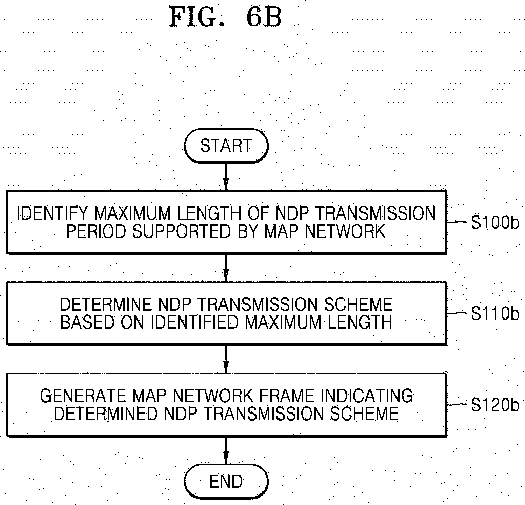

On the other hand, although the length of the NDP transmission period NDP _TPa of FIG. 3 is smaller than the length of the NDP transmission period NDP_TPb of FIG. 4, when a channel state in a MAP network is poor, the probability that the stations STAs fail to properly receive the first NDP and the second NDP in the NDP transmission period NDP_TPa of FIG. 3 may be higher than the probability that the stations STAs fail to properly receive the first NDP and the second NDP in the NDP transmission period NDP_TPb. The first access point AP1, which is a sharing AP, may determine an NDP transmission scheme in consideration of the trade-off as described above. Embodiments related thereto will be described later with reference to FIGS. 6A and 6B.

The stations STAs may identify the first NDP and the second NDP based on information obtained from the MAP network frame. The stations STAs may each generate first channel state information by estimating a first channel state between itself and the first access point AP1 by using the first NDP. Also, the stations STAs may each generate second channel state information by estimating a second channel state between itself and the second access point AP2 by using the second NDP.

At a time point t62, which is a time point a SIFS after the time point t52, the first access point AP1 may transmit a first MAP trigger frame to the stations STAs. For example, the first MAP trigger frame may correspond to a BFRP trigger frame.

At a time point t82, which is a time point a SIFS after a time point t72, the stations STAs may each transmit a first MAP sounding feedback including the first channel state information to the first access point AP1 in response to the first MAP trigger frame.

At a time point t92, the second access point AP2 may transmit a second MAP trigger frame to the stations STAs. For example, the second MAP trigger frame may correspond to a BFRP trigger frame.

At a time point t112, which is a time point a SIFS after a time point t102, the stations STAs may each transmit a second MAP sounding feedback including the second channel state information to the second access point AP2 in response to the second MAP trigger frame.

The first access point AP1 and the second access point AP2 may perform a MAP interference enhancing operation based on the first MAP sounding feedback and the second MAP sounding feedback received from the stations STAs.

FIGS. 5A and 5B are diagrams for describing a MAP interference enhancing operation performed based on channel state information collected through MAP sounding, according to an embodiment. Hereinafter, descriptions identical to those already given above with reference to FIG. 1 will be omitted.

FIG. 5A shows a coordinated beamforming operation of the first access point AP1. Referring to FIG. 5A, the first access point AP1 may generated beamformed data DATA based on MAP sounding feedbacks received through MAP sounding from the first station STA1 and the second station STA2 in the first BSS 11 and transmit the beamformed data DATA to the first station STA1 and the second station STA2. Also, the first access point AP1 may perform null steering based on MAP sounding feedbacks received through MAP sounding from the third station STA3 and the fourth station STA4 in the second BSS 12. According to the present embodiment, the null steering may be defined as an operation of coordinating beamforming matrix of a signal transmitted from the first access point AP1, such that the corresponding signal does not interfere with communication between the second access point AP2 and the third station STA3 and the fourth station STA4. For example, a signal transmitted based on null steering may be measured as received power close to 0 at the third station STA3 after passing through a channel between the first access point AP1 and the third station STA3.

FIG. 5B shows a joint transmission operation between the first access point AP1 and the second access point AP2. Referring to FIG. 5B, the first access point AP1 and the second access point AP2 may perform backhaul data sharing to share data to be transmitted to the first station STA1 and the third station STA3. The first access point AP1 and the second access point AP2 may perform a joint transmission operation in cooperation with each other based on MAP sounding feedbacks received from the first station STA1 in the first BSS 11 through MAP sounding. Also, the first access point AP1 and the second access point AP2 may perform a joint transmission operation in cooperation with each other based on MAP sounding feedbacks received from the third station STA3 in the second BSS 12 through MAP sounding.

However, FIGS. 5A and 5B merely show examples of a MAP interference enhancing operation, and aspects of the inventive are is not limited thereto. There may be more examples of a MAP interference enhancing operation, and, in various examples, MAP sounding according to embodiments may be used.

FIGS. 6A and 6B are flowcharts of a method for a sharing AP to determine an NDP transmission scheme, according to an embodiment.

Referring to FIG. 6A, in operation S100a, a sharing AP may estimate the channel state of a MAP network. For example, the sharing AP may estimate the channel state of a MAP network by using previous channel states with respect to stations within its own BSS. In another example, the sharing AP may estimate the channel state of a MAP network by collecting previous channel states with respect to stations in other BSSs from at least one shared AP. A scheme by which the sharing AP estimates the channel state of a MAP network may be specialized for determining an NDP transmission scheme in MAP sounding. For example, the scheme for estimating the channel state of a MAP network focuses on determination of which of a relatively short NDP transmission period NDP_TPa of FIG. 3 and a relatively long NDP transmission period NDP_TPb of FIG.4 is appropriate, and thus the amount of calculation needed for estimation of the channel state of the MAP network may be minimized.

In operation S110a, the sharing AP may determine an NDP transmission scheme based on the channel state estimated in operation S100a. For example, when the channel state of the MAP network is poorer than a reference value, the sharing AP may determine a first scheme in which APs sequentially transmit NDPs to stations in a certain sequence as the NDP transmission scheme. Also, when the channel state of the MAP network satisfies or is better than the reference value, the sharing AP may determine a second scheme in which APs simultaneously transmit NDPs to stations as the NDP transmission scheme.

In operation S120a, the sharing AP may generate a MAP network frame indicating the NDP transmission scheme determined in operation S110a. For example, the sharing AP may set a particular subfield (e.g., an NDP type subfield) of sharing information field of the MAP network frame to a value indicating a determined NDP transmission scheme.

Referring further to FIG. 6B, in operation S100b, the sharing AP may identify the maximum length of an NDP transmission period supported by the MAP network. For example, in the MAP network, the maximum length of an NDP transmission period supported by the MAP network may be pre-set in consideration of the channel state or a network environment. The sharing AP may obtain the maximum length of a NDP transmission period in advance from the MAP network.

In operation S110b, the sharing AP may determine an NDP transmission scheme based on the maximum length identified in operation S100b. For example, the sharing AP may compare the identified maximum length with an expected length of the NDP transmission period according to the above-stated first scheme and, based on a result of the comparison, determine whether to use the first scheme or the second scheme as the NDP transmission scheme. For example, the sharing AP may determine the above-stated first scheme as the NDP transmission scheme when the expected length of the NDP transmission period according to the first scheme is the same or shorter than the identified maximum length. The sharing AP may determine the above-stated second scheme as the NDP transmission scheme when the expected length of the NDP transmission period according to the first scheme is longer than the identified maximum length.

In operation S120b, the sharing AP may generate a MAP network frame indicating the NDP transmission scheme determined in operation S110b.

According to some embodiments, the channel state of the MAP network of FIG. 6A and the maximum length of the NDP transmission period supported by the MAP network of FIG. 6B may be equally considered or different weights may be applied thereto to determine the NDP transmission scheme.

Also, other than the embodiments described with reference to FIGS. 6A and 6B, various matters needed for determining the NDP transmission scheme may be considered.

FIG. 7 is a diagram showing a MAP network frame 100 according to an embodiment.

Referring to FIG. 7, the MAP network frame 100 may include a MAP mode field, a common information field regarding APs, a plurality of AP information fields, and a plurality of STA information fields. The plurality of AP information fields may include first to k-th (where k is an integer greater than or equal to 1) AP information fields, and the plurality of STA information fields may include first to n-th (where n is an integer greater than or equal to 2) STA information fields. The number of the plurality of AP information fields may correspond to the number of APs participating in MAP sounding, and the number of the plurality of STA information fields may correspond to the number of STAs participating in MAP sounding. In this specification, the plurality of AP information fields may be referred to as an AP information list, and the plurality of STA information fields may be referred to as an STA information list.

According to an embodiment, the MAP mode field may be a field indicating which MAP mode the MAP network frame 100 is to operate in. For example, MAP modes may include a coordinated-spatial reuse (c-SR) mode, a coordinated-orthogonal frequency division multiplexing (c-OFDMA) mode, a coordinated-beamforming (c-BF) mode, a joint transmission mode, and a MAP sounding mode. For example, the sharing AP may set the MAP mode field to a value indicating the MAP sounding mode, thereby informing APs and STAs participating in MAP sounding that the MAP network frame 100 is to operate in the MAP sounding mode.

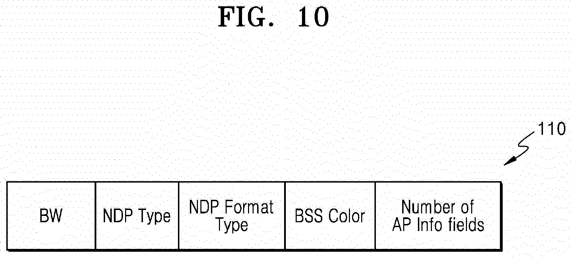

According to an embodiment, the common information field may include information commonly needed for APs to perform MAP sounding. For example, the common information field may include information needed for APs to generate and transmit NDPs. A detailed embodiment thereof will be described later in FIG. 10.

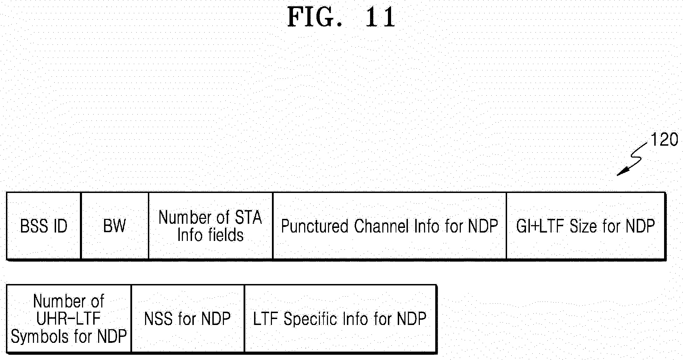

According to an embodiment, an AP information field may include information needed for an AP having a particular BSS ID to generate an NDP. For example, the AP information field may include information for STAs to identify that an NDP received by the STAs is an NDP transmitted from a particular AP. A detailed embodiment thereof will be described later in FIG. 11.

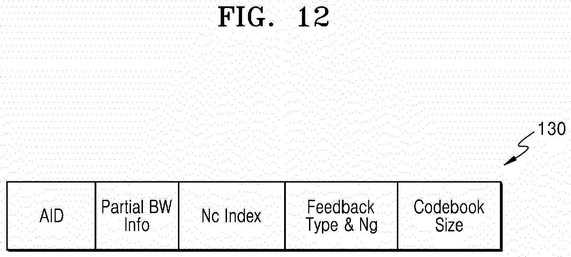

According to an embodiment, an STA information field may include information needed for an STA having a particular STA ID to estimate channel states by using NDPs received from APs. A detailed embodiment thereof will be described later in FIG. 12.

According to an embodiment, a shared AP may confirm that the MAP network frame 100 is to operate in the MAP sounding mode based on the value of the MAP mode field of the MAP network frame 100, determine an NDP transmission scheme from the common information field of the MAP network frame 100, and transmit an NDP to STAs based on an identified NDP transmission scheme.

However, the MAP network frame 100 of FIG. 7 is merely an example embodiment, and aspects of the inventive concept are not limited thereto. The arrangement order of fields of the MAP network frame 100 may be variously changed, and the MAP network frame 100 may further include fields needed for MAP sounding.

Meanwhile, a sharing AP may generate information needed for at least one shared AP and STAs for MAP sounding, appropriately arrange generated information in fields of the MAP network frame 100, and transmit the MAP network frame 100 to the at least one shared AP and the STAs.

Also, a shared AP may identify a value indicating an NDP transmission scheme from the common information field of the MAP network frame 100 in response to the value of the MAP mode field of the MAP network frame 100 indicating a MAP sounding mode.

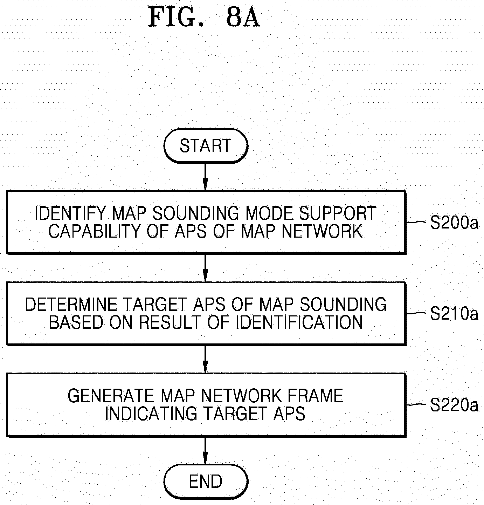

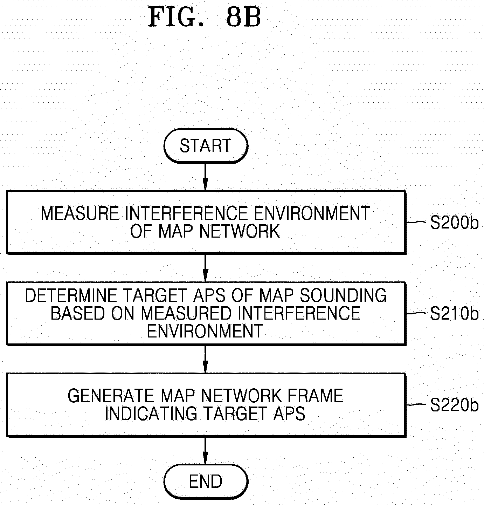

FIGS. 8A and 8B are flowcharts of a method for a sharing AP to determine a target AP participating in MAP sounding, according to an embodiment.

Referring to FIG. 8A, in operation S200a, a sharing AP may identify the MAP sounding mode support capability of APs of a MAP network. For example, the sharing AP may receive information indicating a MAP sounding mode support capability from APs and identify the MAP sounding mode support capability of each of the APs based on received information.

In operation S210a, the sharing AP may determine target APs for MAP sounding based on a result of the identification in operation S200a. In this specification, target APs may be defined as APs determined by a sharing AP to participate in MAP sounding. Target APs may correspond to shared APs.

In operation S220a, the sharing AP may generate MAP network frames indicating the target APs. For example, the sharing AP may place AP information fields corresponding to the target APs in the MAP network frame. The target APs may recognize that they need to participate in MAP sounding from AP information fields of the MAP network frame.

Referring further to FIG. 8B, in operation S200b, the sharing AP may measure the interference environment of the MAP network. For example, the sharing AP may measure the interference environment of the MAP network by measuring the degree of interference between APs of the MAP network.

In operation S210b, the sharing AP may determine target APs for MAP sounding based on the interference environment measured in operation S200b. For example, the sharing AP may determine APs corresponding to degrees of interference equal to or greater than a reference value from among APs based on a measured interference environment as target APs. According to some embodiments, the sharing AP may determine a larger number of target APs as the overall degree of interference in the measured interference environment increases.

In operation S220b, the sharing AP may generate a MAP network frame indicating the target APs.

According to some embodiments, the MAP sounding mode support capability of APs of FIG. 8A and the measured interference environment of FIG. 8B may be equally considered or different weights may be applied thereto to determine target APs.

Also, other than the embodiments described with reference to FIGS. 8A and 8B, various matters needed for determining target APs may be considered.

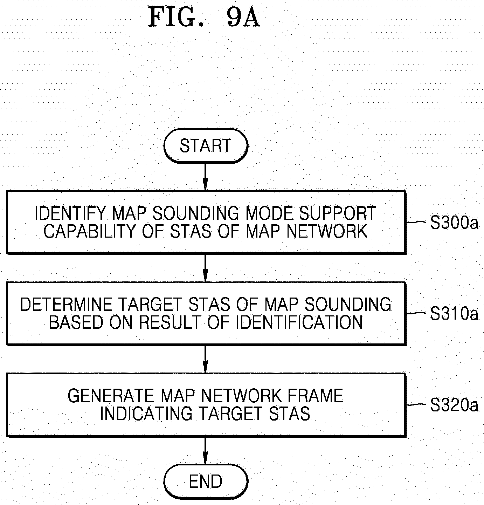

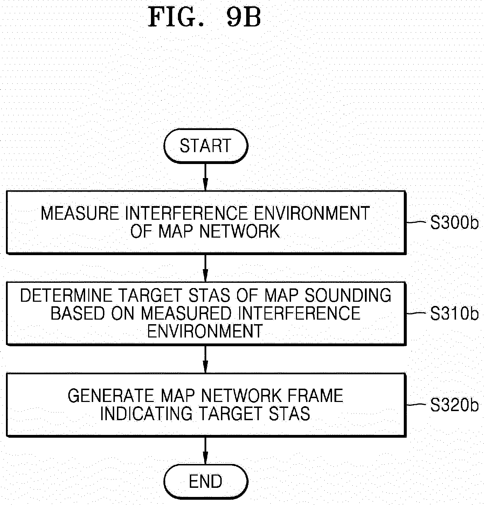

FIGS. 9A and 9B are flowcharts of a method for a sharing AP to determine a target STA participating in MAP sounding, according to an embodiment.

Referring to FIG. 9A, in operation S300a, a sharing AP may identify the MAP sounding mode support capability of STAs in BSSs of APs of a MAP network. For example, the sharing AP may receive information indicating the MAP sounding mode support capability of STAs within its own BSS from APs and confirm the MAP sounding mode support capability of each STA based on received information. According to some embodiments, the sharing AP may also receive information indicating MAP sounding mode support capability directly from STAs.

In operation S310a, the sharing AP may determine target STAs for MAP sounding based on a result of the identification in operation S300a. In this specification, target STAs may be defined as STAs determined by a sharing AP to participate in MAP sounding.

In operation S320a, the sharing AP may generate MAP network frames indicating the target STAs. For example, the sharing AP may place STA information fields corresponding to the target STAs in the MAP network frame. The target STAs may recognize that they need to participate in MAP sounding from STA information fields of the MAP network frame.

Referring further to FIG. 9B, in operation S300b, the sharing AP may measure the interference environment of the MAP network. For example, the sharing AP may measure the interference environment of the MAP network by measuring the degree of interference of communication between APs and STAs of the MAP network.

In operation S310b, the sharing AP may determine target STAs for MAP sounding based on the interference environment measured in operation S300b. For example, the sharing AP may determine STAs corresponding to degrees of interference equal to or greater than a reference value from among STAs based on a measured interference environment as target STAs. According to some embodiments, the sharing AP may determine a larger number of target STAs as the overall degree of interference in the measured interference environment increases.

In operation S320b, the sharing AP may generate MAP network frames indicating the target STAs.

According to some embodiments, the MAP sounding mode support capability of STAs of FIG. 9A and the measured interference environment of FIG. 9B may be equally considered or different weights may be applied thereto to determine target STAs.

Also, other than the embodiments described with reference to FIGS. 9A and 9B, various matters needed for determining target STAs may be considered.

FIG. 10 is a diagram showing a common information field 110 included in the MAP network frame 100 of FIG. 7.

Referring to FIG. 10, the common information field 110 may include a bandwidth (BW) subfield, an NDP type subfield, an NDP format type subfield, a BSS color subfield, and an AP information number subfield.

According to an embodiment, the BW subfield may indicate the bandwidth of NDPs transmitted from APs. According to some embodiments, when APs transmit NDPs with different bandwidths from one another, the bandwidth subfield may be omitted in the common information field 110 and a BW subfield may be included in each of AP information fields.

According to an embodiment, the NDP type subfield may indicate an NDP transmission scheme. For example, the NDP type subfield may indicate that an NDP transmission scheme is a 'joint NDP-11be-like LTFs' scheme, a 'joint NDP sounding-subcarrier interleaved LTFs' scheme, or a 'serial NDP transmission' scheme.

According to an embodiment, the NDP format type subfield may indicate a protocol data unit (PPDU) format type of an NDP. For example, the NDP format type subfield may indicate any one of a format type complying with UHR sounding and an amendment type of a format complying with sounding of a next generation of UHR.

According to an embodiment, the BSS color subfield may indicate a value to be set in the BSS color field in the preamble of an NDP when the NDP transmission scheme is a 'joint NDP transmission' scheme in which APs simultaneously transmit NDPs.

According to an embodiment, the AP information number subfield may indicate the number of APs (including a sharing AP and at least one shared AP) participating in MAP sounding. For example, the value of the AP information number subfield may indicate the number of AP information fields in an AP information list.

However, since the common information field 110 of FIG. 10 is merely an example embodiment, aspects of the inventive concept are not limited thereto. The arrangement order of subfields of the common information field 110 may be variously changed, and the common information field 110 may further include subfields commonly needed for MAP sounding.

FIG. 11 is a diagram showing an AP information field 120 included in the MAP network frame 100 of FIG. 7.

Referring to FIG. 11, the AP information field 120 may include a BSS ID subfield, a BW subfield, a STA information number subfield, a punctured channel information subfield for an NDP, a guard interval (GI) + long training field (LTF) size subfield, a UHR-LTF symbol number subfield, a number of spatial stream (NSS) subfield for an NDP, and an LTF specific information subfield for an NDP.

According to an embodiment, the BSS ID subfield may be a subfield for enabling an AP having the value of the BSS ID subfield as a BSS ID from among APs participating in MAP sounding to identify a corresponding AP information field 120. In other words, an AP may identify the AP information field 120 allocated thereto through the BSS ID subfield. According to some embodiments, the BSS ID subfield may be replaced with a MAP ID subfield. For example, the MAP ID subfield may include a newly allocated ID to identify a corresponding AP through MAP sounding signaling previously performed for MAP sounding (or MAP communication). However, this is merely an example embodiment, and aspects of the inventive concept are not limited thereto. The BSS ID subfield may be implemented in various ways, such that APs participating in MAP sounding may identify their own AP information fields 120.

According to an embodiment, the BW subfield may indicate the bandwidth of an NDP transmitted by an AP having the value of the BSS ID subfield as a BSS ID. According to some embodiments, when the bandwidths of NDPs transmitted by APs are the same, the bandwidth subfield may be omitted in the AP information field 120 and may be placed in the common information field 110 of FIG. 10.

According to an embodiment, the STA information number subfield may indicate the number of STAs participating in MAP sounding from among STAs associated with the AP having the value of the BSS ID subfield as the BSS ID. STAs related to an AP may be understood as STAs within a BSS of the corresponding AP.

According to an embodiment, the punctured channel information subfield may indicate punctured channel information regarding an NDP transmitted from the AP having the value of the BSS ID subfield as the BSS ID.

According to an embodiment, the GI+LTF size subfield may indicate a GI duration and a UHR-LTF size of an NDP transmitted from the AP having the value of the BSS ID subfield as the BSS ID.

According to an embodiment, the UHR-LTF symbol number subfield may indicate the number of UHR-LTF symbols of an NDP transmitted from the AP having the value of the BSS ID subfield as the BSS ID.

According to an embodiment, the NSS subfield may indicate the number of spatial streams of an NDP transmitted by the AP having the value of the BSS ID subfield as the BSS ID.

According to an embodiment, the LTF specific information subfield may indicate specific information needed for the AP having the value of the BSS ID subfield as the BSS ID to generate an NDP. For example, the specific information may indicate a turn in which a corresponding shared AP is set to transmit an NDP in the 'serial NDP transmission' scheme, how a global antenna index of the corresponding shared AP is configured in the 'joint NDP-11be-like LTFs' scheme, or how a subcarrier index for NDP transmission is set in the 'joint NDP sounding-subcarrier interleaved LTFs' scheme.

In the present specification, the punctured channel information subfield, the GI+LTF size subfield, the UHR-LTF symbol number subfield, and the NSS subfield may be defined as individual settings for the AP having the value of the BSS ID subfield as the BSS ID to generate an NDP or concepts included in the individual settings.

However, since the AP information field 120 of FIG. 11 is merely an example embodiment, aspects of the inventive concept are not limited thereto. The arrangement order of subfields of the AP information field 120 may be variously changed, and the AP information field 120 may further include subfields individually needed by an AP for MAP sounding.

FIG. 12 is a diagram showing an STA information field 130 included in the MAP network frame 100 of FIG. 7.

Referring to FIG. 12, the STA information field 130 may include an AID subfield, a partial BW information subfield, an Nc index subfield, a feedback type & N_guard (Ng) subfield, and a codebook size subfield.

According to an embodiment, the AID subfield may be a subfield for enabling an STA having the value of the AID subfield as a STA ID from among STAs participating in MAP sounding to identify a corresponding STA information field 130. In other words, an STA may identify the STA information field 130 allocated thereto through the AID subfield.

According to an embodiment, the partial BW information subfield may indicate a partial BW or a frequency domain of a MAP sounding feedback transmitted by an STA having the value of the AID subfield as the STA ID.

According to an embodiment, the Nc index subfield may indicate the number of columns of a compressed beamforming feedback matrix or space-time streams during generation of a MAP sounding feedback by the STA having the value of the AID subfield as the STA ID. For example, the Nc index subfield may indicate the number of columns of a compressed beamforming feedback matrix when the feedback type is single user (SU) or multiple users (MU) and indicate the number of space-time streams in a channel quality information (CQI) report when the feedback type is CQI.

According to an embodiment, the feedback type & Ng subfield may indicate a feedback type and the value of Ng when the STA having the value of the AID subfield as the STA ID generates a MAP sounding feedback.

According to an embodiment, the codebook size subfield may indicate quantization resolution when the STA having the value of the AID subfield as the STA ID generates a MAP sounding feedback.

However, since the STA information field 130 of FIG. 12 is merely an example embodiment, aspects of the inventive concept are not limited thereto. The arrangement order of subfields of the STA information field 130 may be variously changed, and the STA information field 130 may further include subfields individually needed by an STA for MAP sounding.

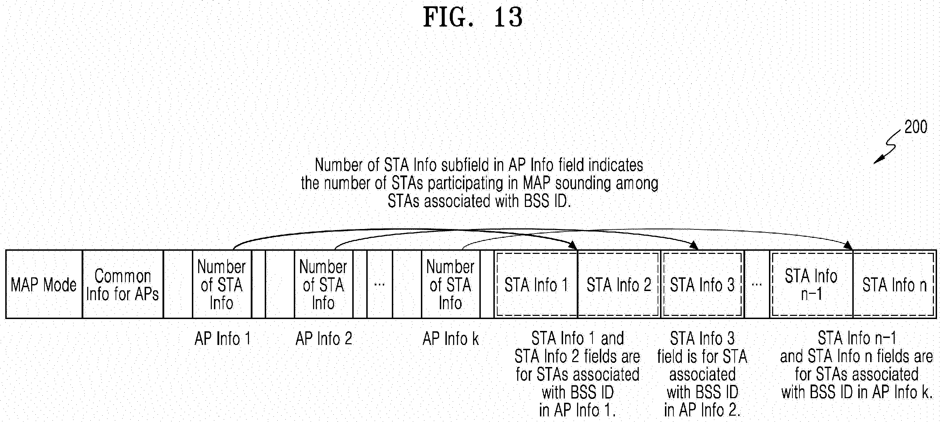

FIG. 13 is a diagram showing an arrangement relationship between AP information fields AP Info 1 to AP Info k and STA information fields STA Info 1 to STA Info n in a MAP network frame 200, according to an embodiment.

Referring to FIG. 13, in the MAP network frame 200, a first AP information field AP Info 1 may be associated with a first STA information field STA Info 1 and a second STA information field STA Info 2, a second AP information field AP Info 2 may be associated with a third STA information field STA Info 3, and a k-th AP information field AP Info k may be associated with an (n-1)-th STA information field STA Info n-1 and an n-th STA information field STA Info n. In this specification, the association between an AP information field with an STA information field may be understood that an STA corresponding to the STA information field belongs to an STA information field in a BSS of an AP corresponding to the AP information field.

In the MAP network frame 200, the STA information fields STA Info 1 to STA Info n may be arranged in correspondence to the arrangement sequence of the AP information fields AP Info 1 to AP Info k associated therewith.

However, this is merely an example embodiment, and aspects of the inventive concept are not limited thereto. The AP information fields AP Info 1 to AP Info k and the STA information fields STA Info 1 to STA Info n may be variously arranged in the MAP network frame 200 to be easily identified by APs and STAs participating in MAP sounding.

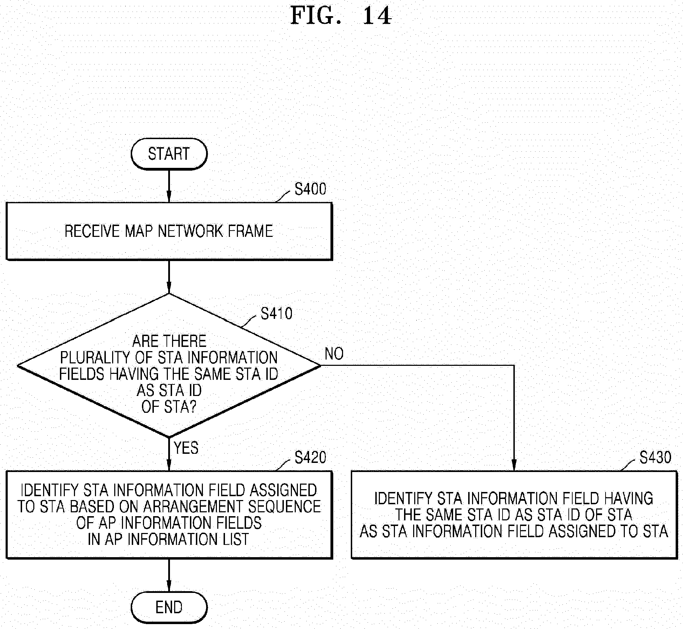

FIG. 14 is a flowchart showing a method of identifying STA information regarding a station, according to an embodiment.

Referring to FIG. 14, in operation S400, a station may receive a MAP network frame.

In operation S410, the station may determine whether there are a plurality of STA information fields having the same STA ID as its own STA ID.

When a result of the determination in operation S410 is 'YES', in operation S420, the station may identify an STA information field assigned thereto based on the arrangement sequence of AP information fields in an AP information list. For example, the station may identify a position of an AP information field assigned to an AP managing a BSS to which the station belongs in the AP information list and identify an STA information field assigned to the station based on a result of the identification and the STA ID. For example, in operation S410, when there are three STA information fields having the same STA ID as the STA ID of the station and an AP information field assigned to the AP managing the BSS to which the station belongs is placed in the first place in the AP information list, the station may identify that the first STA information field from among the three STA information fields as an STA information field allocated to the station.

When a result of the determination in operation S410 is 'NO', in operation S430, the station may identify an STA information field having the same STA ID as the STA ID of the station as an STA information field assigned to the station.

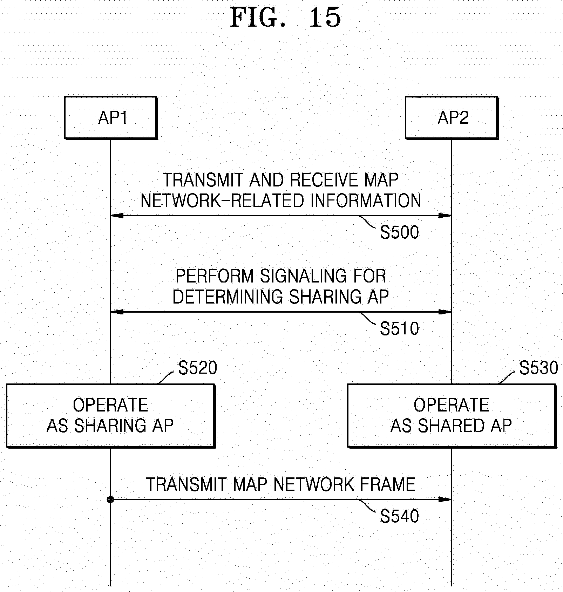

FIG. 15 is a flowchart of an operation method in a MAP network, according to an embodiment. It is assumed that the MAP network includes the first access point AP1 and the second access point AP2.

Referring to FIG. 15, in operation S500, the first access point AP1 and the second access point AP2 may transmit and receive MAP network-related information.

In operation S510, the first access point AP1 and the second access point AP2 may perform signaling for determining a sharing AP.

In operation S520, the first access point AP1 may operate as a sharing AP, and, in operation S530, the second access point AP2 may operate as a shared AP.

In operation S530, the first access point AP1 may transmit a MAP network frame to the second access point AP2.

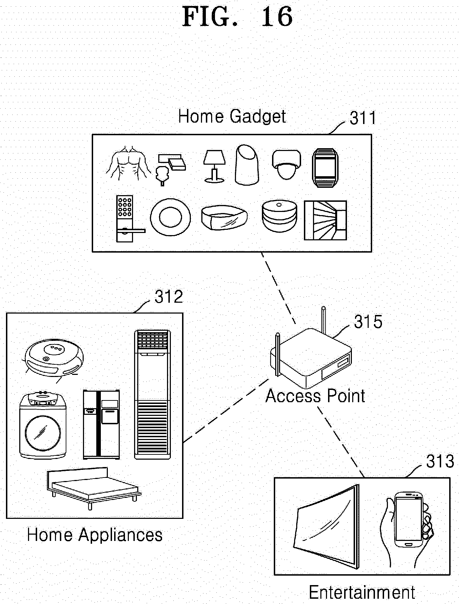

FIG. 16 is a diagram showing examples of apparatuses for wireless communication according to an embodiment. For example, FIG. 16 shows an Internet of Things (IoT) network system including a home device (i.e., gadgets) 311, a home appliance 312, an entertainment device 313, and an access point 315.

As described above with reference to FIGS. 1 to 15, the apparatuses for wireless communication of FIG. 16 may prepare for MAP sounding by transmitting and receiving a MAP network frame. Also, the apparatuses for wireless communication of FIG. 16 may perform MAP sounding based on an NDP transmission scheme indicated by the MAP network frame. Therefore, overall communication throughput of the apparatuses for wireless communication may be improved.

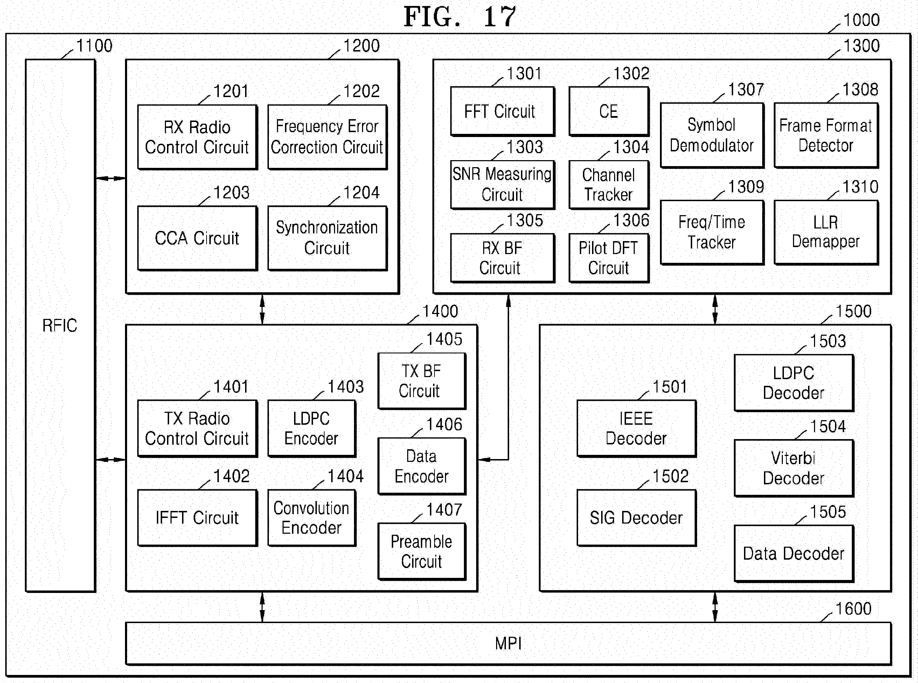

FIG. 17 is a block diagram showing an apparatus 1000 according to an embodiment. The apparatus 1000 of FIG. 17 may be a station or an access point as described above.

Referring to FIG. 17, the apparatus 1000 may include a radio frequency integrated circuit (RFIC) 1100, a receiving circuit 1200, a demodulator 1300, a transmitting circuit 1400, a processor 1500, and a MAC-PHY Interface (MPI) 1600. Although FIG. 17 shows that components 1100, 1200, 1300, 1400, 1500, and 1600 are separated from one another, this is merely an example embodiment, and aspects of the inventive concept are not limited thereto. The components 1100, 1200, and 1300, 1400, 1500, 1600 may be implemented to be included in one chip (e.g., a modem chip).

The receiving circuit 1200 may include a receiving radio (RX Radio) control circuit 1201, a frequency error correction circuit 1202, a clear-channel-assessment (CCA) circuit 1203, and a synchronization circuit 1204.

The demodulator 1300 may include a fast Fourier transform (FFT) circuit 1301, a channel estimator (CE) 1302, a signal to noise ratio (SNR) measuring circuit 1303, a channel tracker 1304, a reception beamforming (RX BF) circuit 1305, a pilot discrete Fourier transform (DFT) circuit 1306, a symbol demodulator 1307, a frame format detector 1308, a frequency/time tracker 1309, and log-likelihood ratio (LLR) demapper 1310.

The transmitting circuit 1400 may include a transmission radio (TX Radio) control circuit 1401, an inverse fast Fourier transform (IFFT) circuit 1402, a low-density parity-check (LDPC) encoder 1403, a convolutional encoder 1404, a transmission beamforming (TX BF) circuit 1405, a data encoder 1406, and a preamble circuit 1407.

The processor 1500 may include an institute of electrical and electronics engineers (IEEE) decoder 1501, a signal (SIG) decoder 1502, an LDPC decoder 1503, a Viterbi decoder 1504, and a data decoder 1505.

According to an embodiment, the transmitting circuit 1400 may generate the above-stated MAP network frame by using at least one of internal components 1401, 1402, 1403, 1404, 1405, 1406, and 1407 and output the MAP network frame through the RFIC 1100.

According to an embodiment, the processor 1500 may decode a received MAP network frame by using at least one of internal components 1501, 1502, 1503, 1504, and 1505 and extract information needed for MAP sounding. The transmitting circuit 1400 may generate an NDP by using at least one of the internal configurations 1401, 1402, 1403, 1404, 1405, 1406, and 1407 based on information extracted by the processor 1500 and output the NDP through the RFIC 1100 according to the NDP transmission scheme described above.

According to an embodiment, the demodulator 1300 may estimate a channel state based on a received NDP by using at least one of internal components 1301, 1302, 1303, 1304, 1305, 1306, 1307, 1308, 1309, and 1310 and generate channel state information. The transmitting circuit 1400 may generate a MAP sounding feedback including channel state information by using at least one of the internal components 1401, 1402, 1403, 1404, 1405, 1406, and 1407 and output the MAP sounding feedback through the RFIC 1100.

While aspects of the inventive concept have been particularly shown and described with reference to embodiments thereof, it will be understood that various changes in form and details may be made therein without departing from the scope of the following claims.

## Claims

1. A method of operating a second access point (AP2) in a wireless local area network system (10), the method comprising:
receiving a multiple access point network frame from a first access point (AP1);
identifying a null data packet transmission scheme for multiple access point sounding from the multiple access point network frame; and
transmitting a first null data packet to a station (STA) in association with transmission of a second null data packet from the first access point (AP1) to the station (STA) within a null data packet transmission period based on the identified null data packet transmission scheme.

2. The method of claim 1, wherein identifying the null data packet transmission scheme comprises:
checking a second value indicating the null data packet transmission scheme from a null data packet type subfield of a common information field of the multiple access point network frame, in response to a first value of a multiple access point mode field of the multiple access point network frame indicating a multiple access point sounding mode.

3. The method of claim 2, wherein the common information field further comprises at least one of a null data packet format type subfield indicating formats of the first null data packet and the second null data packet, a basic service set color subfield indicating a value set in basic service sets color fields of preambles of the first null data packet and the second null data packet, and an access point information field number subfield indicating a number of at least one apparatus participating in the multiple access point sounding as an access point.

4. The method of any preceding claim, wherein the null data packet transmission scheme is any one of a first scheme in which the first null data packet and the second null data packet are simultaneously transmitted to the station (STA) and a second scheme in which the first null data packet and the second null data packet are sequentially transmitted to the station (STA).

5. The method of claim 4, wherein, to the first scheme, any one of a scheme in which the first null data packet and the second null data packet are coordinated to be orthogonal to each other and a scheme in which first subcarriers for transmission of the first null data packet and second subcarriers for transmission of the second null data packet are interleaved with respect to each other is applied.

6. The method of any preceding claim, further comprising:
identifying an access point information field assigned to the second access point (AP2) from the multiple access point network frame; and
generating the null data packet based on the identified access point information field.

7. The method of claim 6, wherein the identifying of the access point information field assigned to the second access point (AP2) comprises comparing a first value of a basic service sets ID subfield of the access point information field with a second value that is a basic service sets ID assigned to the second access point (AP2).

8. The method of any preceding claim, further comprising:
transmitting a first multiple access point trigger frame to the station (STA); and
receiving a multiple access point sounding feedback associated with the first multiple access point trigger frame from the station (STA).

9. A method of operating a first access point (AP 1) in a wireless local area network system (10), the method comprising:
determining second apparatuses participating in multiple access point sounding as access points and third apparatuses participating in the multiple access point sounding as stations;
determining a null data packet transmission scheme for the multiple access point sounding;
generating a multiple access point network frame indicating the second apparatuses, the third apparatuses, and the null data packet transmission scheme; and
transmitting the multiple access point network frame to the second apparatuses and the third apparatuses.

10. The method of claim 9, further comprising:
determining a common format of null data packets of the second apparatuses; and
determining individual settings for null data packet generation of each of the second apparatuses,
wherein the multiple access point network frame indicates the common format and the individual settings.

11. The method of claim 9 or claim 10, wherein the determining of the second apparatuses comprises:
identifying multiple access point sounding mode support capability of fourth apparatuses including the first access point (AP1) constituting a multiple access point network; and
determining the second apparatuses from among the fourth apparatuses based on a result of the identification.

12. The method of any of claims 9 to 11, wherein the determining of the second apparatuses comprises:
measuring an interference environment of a multiple access point network comprising fourth apparatuses including the first access point (AP1); and
determining the second apparatuses from among the fourth apparatuses based on a measured interference environment.

13. The method of any of claims 9 to 12, wherein the determining of the null data packet transmission scheme comprises:
estimating a channel state of the multiple access point network comprising fourth apparatuses including the first access point (AP1); and
determining the null data packet transmission scheme based on an estimated channel state.

## Patentansprüche

1. Verfahren zum Betreiben eines zweiten Zugangspunkts (AP2) in einem drahtlosen lokalen Netzwerksystem (10), wobei das Verfahren umfasst:
Empfangen eines Multi-Access-Point-Netzwerk-Frames von einem ersten Zugangspunkt (AP1);
Identifizieren eines Nulldatenpaket-Übertragungssystems für Multi-Access-Point-Sounding aus dem Multi-Access-Point-Netzwerk-Frame; und
Übertragen eines ersten Nulldatenpakets an eine Station (STA), die der Übertragung eines zweiten Nulldatenpakets zugeordnet ist, von dem ersten Zugangspunkt (AP1) an die Station (STA) innerhalb eines Nulldatenpaket-Übertragungszeitraums basierend auf dem identifizierten Nulldatenpaket-Übertragungssystem.

2. Verfahren nach Anspruch 1, wobei das Identifizieren des Nulldatenpaket-Übertragungssystems umfasst:
Überprüfen eines zweiten Werts, der das Nulldatenpaket-Übertragungssystem aus einem Nulldatenpaket-Typ-Teilfeld eines gemeinsamen Informationsfeldes des Multi-Access-Point-Netzwerk-Frames als Reaktion auf einen ersten Wert eines Multi-Access-Point-Modus-Feldes des Multi-Access-Point-Netzwerk-Frames, der einen Multi-Access-Point-Sounding-Modus angibt.

3. Verfahren nach Anspruch 2, wobei das gemeinsame Informationsfeld weiter mindestens eines von einem Nulldatenpaket-Formattyp-Teilfeld umfasst, das die Formate des ersten Nulldatenpakets und des zweiten Nulldatenpakets angibt, einem Basis-Service-Set-Farbfeld, das einen in den Basis-Service-Set-Farbfeldern der Präambeln des ersten Nulldatenpakets und des zweiten Nulldatenpakets festgelegten Wert angibt, und einem Zugangspunktinformationsfeldnummer-Teilfeld, das die Nummer mindestens einer Einrichtung angibt, die als ein Zugangspunkt an dem Multi-Access-Point-Sounding teilnimmt.

4. Verfahren nach einem vorstehenden Anspruch, wobei das Nulldatenpaket - Übertragungssystem ein beliebiges von einem ersten System, bei dem das erste Nulldatenpaket und das zweite Nulldatenpaket gleichzeitig an die Station (STA) übertragen werden, und einem zweiten System ist, bei dem das erste Nulldatenpaket und das zweite Nulldatenpaket nacheinander an die Station (STA) übertragen werden.

5. Verfahren nach Anspruch 4, wobei bei dem ersten System ein beliebiges von einem System, bei dem das erste Nulldatenpaket und das zweite Nulldatenpaket koordiniert sind, um zueinander orthogonal zu sein, und einem System, bei dem die ersten Teilträger zur Übertragung des ersten Nulldatenpakets und die zweiten Teilträger zur Übertragung des zweiten Nulldatenpakets miteinander verschachtelt sind, angewendet wird.

6. Verfahren nach einem vorstehenden Anspruch, weiter umfassend:
Identifizieren eines Zugangspunktinformationsfeldes, das dem zweiten Zugangspunkt (AP2) aus dem Multi-Access-Point-Netzwerk-Frame zugewiesen ist; und
Erzeugen des Nulldatenpakets basierend auf dem identifizierten Zugangspunktinformationsfeld.

7. Verfahren nach Anspruch 6, wobei das Identifizieren des dem zweiten Zugangspunkt (AP2) zugewiesenen Zugangspunktinformationsfeldes das Vergleichen eines ersten Werts eines Basic-Service-Set-ID-Teilfeldes des Zugangspunktinformationsfeldes mit einem zweiten Wert umfasst, der eine dem zweiten Zugangspunkt (AP2) zugewiesene Basic-Service-Set-ID ist.

8. Verfahren nach einem vorstehenden Anspruch, weiter umfassend:
Übertragen eines ersten Multi-Access-Point-Auslöser-Frames an die Station (STA);
und
Empfangen einer Multi-Access-Point-Sounding-Rückmeldung, die dem ersten Multi-Access-Point-Auslöser-Frame von der Station (STA) zugeordnet wird.

9. Verfahren zum Betreiben eines ersten Zugangspunkts (AP1) in einem drahtlosen lokalen Netzwerksystem (10), wobei das Verfahren umfasst:
Bestimmen zweiter Einrichtungen, die an dem Multi-Access-Point-Sounding teilnehmen, als Zugangspunkte, und dritter Einrichtungen, die an dem Multi-Access-Point-Sounding teilnehmen, als Stationen;
Bestimmen eines Nulldatenpaket-Übertragungssystems für das Multi-Access-Point-Sounding;
Erzeugen eines Multi-Access-Point-Netzwerk-Frames, der die zweite Einrichtung, die dritte Einrichtung und das Nulldatenpaket-Übertragungssystem angibt; und
Übertragen des Multi-Access-Point-Netzwerk-Frames an die zweiten und die dritten Einrichtungen.

10. Verfahren nach Anspruch 9, weiter umfassend:
Bestimmen eines gemeinsamen Formats für Nulldatenpakete der zweiten Einrichtungen; und
Bestimmen individueller Einstellungen für Nulldatenpaketerzeugung jeder der zweiten Einrichtungen,
wobei der Multi-Access-Point-Netzwerk-Frame das gemeinsame Format und die individuellen Einstellungen angibt.

11. Verfahren nach Anspruch 9 oder Anspruch 10, wobei das Bestimmen der zweiten Einrichtung umfasst:
Identifizieren der Unterstützungskapazität für den Multi-Access-Point-Sounding-Modus vierter Einrichtungen, die den ersten Zugangspunkt (AP1) einschließen, die ein Multi-Access-Point-Netzwerk bilden; und
Bestimmen der zweiten Einrichtungen aus den vierten Einrichtungen basierend auf einem Ergebnis der Identifikation.

12. Verfahren nach einem der Ansprüche 9 bis 11, wobei das Bestimmen der zweiten Einrichtungen umfasst:
Messen einer Störumgebung eines Multi-Access-Point-Netzwerks, das vierte Einrichtungen umfasst, die den ersten Zugangspunkt (AP1) einschließen; und
Bestimmen der zweiten Einrichtungen aus den vierten Einrichtungen basierend auf einer gemessenen Störumgebung.

13. Verfahren nach einem der Ansprüche 9 bis 12, wobei das Bestimmen des Nulldatenpaket-Übertragungssystems umfasst:
Schätzen eines Kanalzustands des Multi-Access-Point-Netzwerks, das vier Einrichtungen einschließlich des ersten Zugangspunkts (AP1) umfasst; und
Bestimmen des Nulldatenpaket-Übertragungssystems basierend auf einem geschätzten Kanalzustand.

## Revendications

1. Procédé de fonctionnement d'un deuxième point d'accès (AP2) dans un système de réseau local sans fil (10), le procédé comprenant :
la réception d'une trame réseau à points d'accès multiples provenant d'un premier point d'accès (AP1) ;
l'identification d'un schéma de transmission de paquets de données nuls pour le sondage de points d'accès multiples à partir de la trame réseau à points d'accès multiples ; et
la transmission d'un premier paquet de données nul à une station (STA) en association avec la transmission d'un deuxième paquet de données nul du premier point d'accès (AP1) à la station (STA) au cours d'une période de transmission de paquet de données nul basée sur le schéma de transmission de paquet de données nul identifié.

2. Procédé selon la revendication 1, dans lequel l'identification du schéma de transmission de paquets de données nuls comprend :
la vérification d'une deuxième valeur indiquant le schéma de transmission de paquet de données nul à partir d'un sous-champ de type de paquet de données nul d'un champ d'information commun de la trame de réseau à point d'accès multiple, en réponse à une première valeur d'un champ de mode de point d'accès multiple de la trame de réseau à point d'accès multiple indiquant un mode de sondage de point d'accès multiple.

3. Procédé selon la revendication 2, dans lequel le champ d'information commun comprend en outre au moins un sous-champ de type de format de paquet de données nul indiquant des formats du premier paquet de données nul et du deuxième paquet de données nul, un sous-champ de couleur d'ensemble de services de base indiquant une valeur définie dans les champs de couleur d'ensembles de services de base des préambules du premier paquet de données nul et du deuxième paquet de données nul, et un sous-champ de numéro de champ d'information de point d'accès indiquant le numéro d'au moins un appareil participant au sondage de point d'accès multiple en tant que point d'accès.

4. Procédé selon une quelconque revendication précédente, dans lequel le schéma de transmission de paquets de données nuls est soit un premier schéma dans lequel le premier paquet de données nul et le deuxième paquet de données nul sont transmis simultanément à la station (STA), soit un deuxième schéma dans lequel le premier paquet de données nul et le deuxième paquet de données nul sont transmis séquentiellement à la station (STA).

5. Procédé selon la revendication 4, dans lequel, au premier schéma, est appliqué soit un schéma dans lequel le premier paquet de données nul et le deuxième paquet de données nul sont coordonnés pour être perpendiculaires l'un à l'autre, soit un schéma dans lequel les premières sous-porteuses pour la transmission du premier paquet de données nul et les deuxièmes sous-porteuses pour la transmission du deuxième paquet de données nul sont entrelacées l'une par rapport à l'autre.

6. Procédé selon une quelconque revendication précédente, comprenant en outre :
l'identification d'un champ d'information de point d'accès attribué au deuxième point d'accès (AP2) à partir de la trame de réseau à points d'accès multiples ; et
la génération du paquet de données nul en fonction du champ d'informations du point d'accès identifié.

7. Procédé selon la revendication 6, dans lequel l'identification du champ d'informations du point d'accès attribué au deuxième point d'accès (AP2) comprend la comparaison d'une première valeur d'un sous-champ d'identifiant d'ensemble de services de base du champ d'informations du point d'accès avec une deuxième valeur qui est un identifiant d'ensemble de services de base attribué au deuxième point d'accès (AP2).

8. Procédé selon une quelconque revendication précédente, comprenant en outre :
la transmission d'une première trame de déclenchement de point d'accès multiple à la station (STA) ; et
la réception d'un retour de sondage de point d'accès multiple associé à la première trame de déclenchement de point d'accès multiple de la station (STA).

9. Procédé de fonctionnement d'un premier point d'accès (AP1) dans un système de réseau local sans fil (10), le procédé comprenant :
la détermination des deuxièmes appareils participant au sondage à points d'accès multiples en tant que points d'accès et les troisièmes appareils participant au sondage à points d'accès multiples en tant que stations ;
la détermination d'un schéma de transmission de paquets de données nuls pour le sondage de points d'accès multiples ;
la génération d'une trame de réseau à points d'accès multiples indiquant les deuxièmes appareils, les troisièmes appareils et le schéma de transmission de paquet de données nul ; et
la transmission de la trame réseau à points d'accès multiples aux deuxièmes et troisièmes appareils.

10. Procédé selon la revendication 9, comprenant en outre :
la détermination d'un format commun pour les paquets de données nuls des deuxièmes appareils ; et
la détermination des paramètres individuels de génération de paquets de données nuls pour chacun des deuxièmes appareils,
dans lequel la trame de réseau à points d'accès multiples indique le format commun et les paramètres individuels.

11. Procédé selon la revendication 9 ou la revendication 10, dans lequel la détermination des deuxièmes appareils comprend :
l'identification de la capacité de prise en charge du mode de sondage à points d'accès multiples des quatrièmes appareils, y compris le premier point d'accès (AP1) constituant un réseau à points d'accès multiples ; et
la détermination des deuxièmes appareils parmi les quatrièmes appareils en fonction d'un résultat de l'identification.

12. Procédé selon l'une quelconque des revendications 9 à 11, dans lequel la détermination des deuxièmes appareils comprend :
la mesure d'un environnement d'interférence d'un réseau à points d'accès multiples comprenant des quatrièmes appareils, incluant le premier point d'accès (AP1) ; et
la détermination des deuxièmes appareils parmi les quatrièmes appareils en fonction d'un environnement d'interférence mesuré.

13. Procédé selon l'une quelconque des revendications 9 à 12, dans lequel le schéma de détermination du schéma de transmission de paquets de données nuls comprend :
l'estimation de l'état du canal du réseau à points d'accès multiples comprenant des quatrièmes appareils, incluant le premier point d'accès (AP1) ; et
la détermination du schéma de transmission des paquets de données nuls en fonction de l'état estimé du canal.
